**Europäisches Patentamt**

**European Patent Office**

**Office européen des brevets**

(19)

(11) **EP 1 607 897 A2**

(12) **EUROPEAN PATENT APPLICATION**

(43) Date of publication:
**21.12.2005 Bulletin 2005/51**

(51) Int Cl.⁷: **G06F 17/60**

(21) Application number: **05386012.8**

(22) Date of filing: **18.05.2005**

| | |
|---|---|
| (84) Designated Contracting States:<br>**AT BE BG CH CY CZ DE DK EE ES FI FR GB GR HU IE IS IT LI LT LU MC NL PL PT RO SE SI SK TR**<br>Designated Extension States:<br>**AL BA HR LV MK YU** | (71) Applicant: **Andriopoulos, Ioannis**<br>**14561 Kifisia Attikis (GR)** |
| (30) Priority: **20.05.2004 GR 2004100202**<br>**25.01.2005 GR 2005010030** | (72) Inventor: **Andriopoulos, Ioannis**<br>**14561 Kifisia Attikis (GR)** |

(54) **Method, system and device for checking the authenticity of the origin and integrity of the contents of VAT transactions using a unique electronic transaction code**

(57) The current invention utilizes the facilities offered by the Information Technology and Telecommunications sector and guarantees the authenticity of the origin and integrity of the contents of all tax-invoices-vouchers, concurrently materializing the automatic recording of all taxable-transactions carried out within the European Territory, including Retail Transactions. Each transaction is represented by a "Unique Electronic Transaction Code" and is identified by a "Digital Transaction Identity". The current invention utilizes all digital fiscal data available in all data processing devices involved and, using a device called "Fiscal Transaction Logging Unit", maintains Transaction databases, thus materializing absolute and objective transparency in the VAT collection system. When implemented in full scale, inter-connecting all taxable entities with national databases, it allows monitoring of all intra-Community acquisitions.

# Figure 1: INTRA-COMMUNITY TRANSACTION LOGGING

Printed by Jouve, 75001 PARIS (FR)

EP 1 607 897 A2

**Description**

The present invention relates to the wider sector of Information Technology (IT) in conjunction with Telecommunications and access to Public Telephony Networks (landlines, mobile and satellite).

This invention is related to and claims priority of the Greek applications, file number 20040100202, filed May 20, 2004, and file number 20050100030, filed January 25, 2005, both of which are hereby incorporated by reference in their entirety.

Value Added Tax (VAT) is a general consumption tax assessed on the value added to supplies of goods and services in the European Union (EU). It applies, in principle, to all commercial transactions between two parties, in connection to the supply (production and distribution) of goods and the provision of services. It is a consumption tax, since it is borne ultimately by the final consumer. It is charged as a percentage of price, which means that the actual tax burden is visible at each stage in the production and distribution chain. It is collected fractionally, via a system of deductions whereby taxable entities (i.e., VAT-registered businesses) can deduct from their VAT liability the amount of tax they have paid to other taxable entities on purchases for their business activities. This mechanism ensures that the tax is neutral regardless of how many transactions are involved. European Council Sixth VAT Directive 77/388/EEC of 17 May 1977 and all amending acts specify certain (but much complicated) parameters aiming towards a common system of VAT and the uniform basis for its assessment. This Sixth VAT Directive aims to ensure that each Member State of EU has a broadly identical "VAT base" - VAT levied on the same transactions. Its subsequent amendments have attempted to remove anomalies and to deal with VAT fraud.

Generally speaking, VAT liability is incurred by taxable transactions, which will be herein referred to as VAT transactions.

A VAT transaction is a financial activity, which takes place between 2 different parties, herein referred to as the seller and the purchaser and involves the supply of goods or provision of services within the EU. Depending upon the nature of 2nd party involved (the purchaser), VAT transactions may be generally categorized into 3 different major types, namely:

- Business to Business (B2B), where both parties involved are taxable entities (VAT registered). This is the common case of supplies of goods and services between companies, professionals and other taxable business units. In this case the source document issued by the seller is called an "invoice".

- Business to Consumers (B2C), where only the seller is a taxable entity, whereas the purchaser is a non-taxable entity. This is the case of Retail, where tax vouchers (receipts) are issued and handed out to the customer. Usually, most B2C transactions are carried out using "Fiscal Point of Sale" devices (Fiscal POS).

- Government Transactions (GOV), where at least one of the parties involved is the State itself (G2G, B2G, C2G, all are typical Government transactions).

The details concerning each VAT transaction are described in source documents. The invoice is one of the most important documents in the commercial world. It even serves as a vehicle for VAT. Invoices allow businesses to set off input tax against output tax, they provide information on what VAT rules apply to a given transaction and they constitute hard evidence during audits by the tax authorities. Businesses are under a legal obligation to issue invoices for all supplies of products or provision of services. Each VAT invoice must at least contain the following details:

- The date of issue.
- A sequential number, based on one or more series, which uniquely identifies the invoice (invoice number).
- The VAT identification number (VAT-Id.No) of the seller.
- The VAT identification number (VAT-Id.No) of the purchaser.
- The full name and address of both the seller and the purchaser.
- The quantity and nature of the goods supplied or the extent and nature of the services rendered.
- The taxable amount per rate or exemption, the unit price exclusive of tax and any discounts or rebates if they are not included in the unit price.
- The VAT rate applied.
- The VAT amount due.
- Where an exemption is involved or where the purchaser is liable to pay the tax, reference to the appropriate provision of the corresponding EU directive, to the corresponding national provision, or to any indication that the supply is exempt or subject to the reverse charge procedure.
- Other special requirements apply where the intra-Community supply of a new means of transport is involved, or the margin scheme is applied, or the person liable to pay the tax is a tax representative.

Invoices may be sent either on paper or, subject to an acceptance by the customer, by electronic means. Invoices sent by electronic means must be accepted by Member States provided that the authenticity of the origin and integrity of the contents are guaranteed either:

- By means of an advanced electronic signature within the meaning of Article 2(2) of Directive 1999/93/EC of the European Parliament and of the Council of 13 December 1999 on a Community framework for electronic signatures. Member States may however ask for the advanced electronic signature to be based on a qualified certificate and created by a secure-signature-creation device, within the meaning of Article 2(6) and (10) of the aforementioned Directive.

  Or

- By means of electronic data interchange as defined in Article 2 of Commission Recommendation 1994/820/EC of 19 October 1994 relating to the legal aspects of electronic data interchange when the agreement relating to the exchange provides for the use of procedures guaranteeing the authenticity of the origin and integrity of the data. However Member States may, subject to conditions which they lay down, require that an additional summary document on paper is necessary.

An electronic signature means data in electronic format which are attached to or logically associated with other electronic data and which serve as a method of authentication (of the message).

An Advanced Electronic Signature (AES) is an electronic signature that meets all of the four following requirements:

- The signature is uniquely linked to the signatory.
- The signature is capable of identifying the signatory.
- The signature is created using means that the signatory can maintain under his sole control.
- The signature is linked to the data to which it relates in such a manner that any subsequent change of those data is detectable.

A Secure-Signature-Creation-Device (SSCD) is software or hardware, meeting specific requirements, used to implement unique data, such as codes or private cryptographic keys, which are used by the signatory to create an electronic signature.

Whilst B2B transactions are handled by invoices, B2C transactions are usually carried out using Fiscal POS terminals. In this case, the POS terminals must issue consecutively numbered tax-justifying documents (fiscal vouchers) to be handed-out to the customers who purchase goods or services.

All the operations that affect the accumulation of the value of the acts or the activities performed, must produce a tax-justifying document. The POS terminal must also issue a global daily report (daily closure) in accordance with the requisites specified by the fiscal provisions of each Member State. The POS terminals are capable of printing a summary of the entire contents of the fiscal memory, when it is requested by an authorized tax officer.

A typical fiscal voucher contains amongst other, at least the following information:

- POS owner name, address and VAT-Id.No.
- Description and amount of items sold or services rendered.
- Indication of VAT category (A, B, C, D, E or 01, 02, 03, 04, 05) that the sale amounts pertain to.
- Date and time
- Voucher number
- Unique fiscal identification number (manufacturer identification plus the POS serial number).

Each item sold is assigned a VAT category, that indicates the VAT percentage rate applied to the base price in order to obtain the sale price. Since VAT percentages vary from country to country, VAT categories are usually indicated by letters A, B, C, D, E or numbers 01, 02, 03, 04, 05.

The net amount (taxable value) is computed using the formula:

$$NETAMOUNT = (SALEAMOUNT/(1+VATPERCENTAGE/100)).$$

The VAT due is computed using the formula:

$$VATDUE = SALEAMOUNT - NETAMOUNT.$$

During each sale period, these amounts update the daily accumulators and counters.

At the end of each sale period, the "Close Sale Period" procedure must be executed. This procedure safely stores in the POS fiscal memory the cumulative sums for net sales and corresponding VAT due for all taxable VAT categories and generates the closure report, which is given a unique sequential serial number (closure number).

If the Fiscal POS is equipped with a serial communication port, then the fiscal memory dump is accomplished by a serially interconnected electronic device, using a "known-filed-and-declared" simple serial communication protocol. In the absence of such a serial port, the POS terminal produces a printed (hard copy) summary of the entire contents of the fiscal memory. In both cases, the fiscal memory data for each closure consist at least of:

- Closure Date
- Closure Number (automatically generated unique sequential serial number of the "Sale Period Closure Report").
- Net sales value exempted from VAT (usually category E).
- Total net sales taxable value (usually categories A+B+C+D).
- Total VAT amount due (usually categories A+B+C+D).

The correct operation of the current VAT system within the EU requires that each taxable entity fulfills a number of obligations. These usually concern accounting & book keeping, invoice issuing & archiving, the annual filing of client lists to whom supplies were made, the submission of VAT returns and of course the prompt payment of VAT due.

Since the normal VAT system imposes considerable obligations which, for many small enterprises are difficult to comply with, special non objective systems and exemptions are in effect in Member States, resulting in VAT to be charged and collected as a flat-rate or turnover percentage or even not collected at all, regardless of the actual sales and purchases incurred by each taxable entity.

In all EU Member States, all VAT transaction fiscal data are just electronically stored in the local memory of the electronic data processing devices that "print" the fiscal documents. In the absence of such data processing device, the data are simply written by hand on tax documents issued by taxable entities, without any further processing, thus remaining totally unexploited, useless and wasted.

Furthermore, Tax Authorities expect each taxable entity to sincerely file periodic VAT returns. At the end of each fiscal year, a final recapitulating tax return must be submitted by each taxable entity, containing the figures from the periodic returns filed so-far and any adjustments made during the fiscal year. Auditing of such returns is practically impossible.

Also, under the existing VAT arrangements, sales of goods by taxable entities established in one Member State to entities (traders) registered for VAT in other Member States are exempt from VAT. Tax is payable by the purchasers in their own country, and the revenue generated goes to the country of final consumption. Member States are no longer able to obtain information about the flow of goods into their territory by the use of traditional customs controls at their frontiers. However, since goods circulate between Member States without being taxed, this system may encourage fraud. Usually this consists of carrying out of repeated (cross-border) purchase and sales transactions within a rapidly changing group of companies. The cross-border dimension means that VAT is not paid in the country of origin, but the company in the country of destination disappears without fulfilling it's obligation to pay VAT. Usually an extensive and complicated chain of transactions in several countries is used to cover up what is actually happening, resulting in considerable losses to Member States' exchequers.

In order to deal with cross-border intra-Community acquisitions, the "VAT Information Exchange System" (VIES) has been established. This is an electronic means of transmitting information relating to VAT-registration (validity of VAT-numbers) of companies registered in EU. Furthermore, information relating to (tax exempt) intra-Community supplies between Member States' administrations is also transmitted via VIES. However VIES turned out to be insufficient, mainly due to poor data quality and long time-interval between the VAT cross-border transaction itself and the notification of the Member State in charge to promptly collect the VAT due.

Finally, the fiscal requirements introduced by the Greek Ministry of Economy & Finance for electronic invoicing based on AES created by SSCD, do not tackle the above mentioned problems, since all electronic fiscal data remain scattered and thus inaccessibly unexploited in the computers which printed the invoices. Circular number 1257/2002 - issued by the Greek Ministry of Economy & Finance - Directorate General for Taxation - Division 15, describes in detail the technical specifications that all SSCDs for electronic invoicing must comply with.

The current invention utilizes the facilities offered by the IT and Telecommunications sector and guarantees not only the authenticity of the origin and integrity of the contents of all tax-invoices-vouchers, but it also materializes the automatic electronic recording of all taxable-transactions carried out within the European Territory, including Retail Transactions (B2C). The current invention utilizes all digital fiscal data available in all data processing devices involved and using a "Fiscal Transaction Logging Unit" (FTLU) maintains Transaction databases, thus materializing absolute and objective transparency in the VAT collection system.

When implemented within the European Territory, inter-connecting all taxable entities with national databases, it offers the following advantages:

a. Each taxable transaction is can be electronically traced via a simple Digital Transaction Identity (DTI).

b. Each invoice recipient benefits the absolute checking capability for verifying the authenticity of the origin and contents of every incoming invoice.

c. Tax Authorities acquire the tools to absolutely eliminate all fake invoices.

d. VAT liabilities are objectively assessed, since the origin and recipient of every transaction are uniquely traced and validated all over Europe.

e. All Taxable Retail sales are recorded on a daily basis, thus assuring prompt collection of VAT due.

f. Direct B2B electronic invoicing leads to considerable cost savings and optimizes the overall billing process, since the overhead cost of preparing, sending and filing invoices would be eliminated.

g. Traders fully benefit from the Internal Market by the use of a simplified electronic invoicing system.

h. The necessary investment required for the supply of all taxable entities within the EU with appropriate equipment for transaction logging is practically negligible, when compared to the financial benefits obtained.

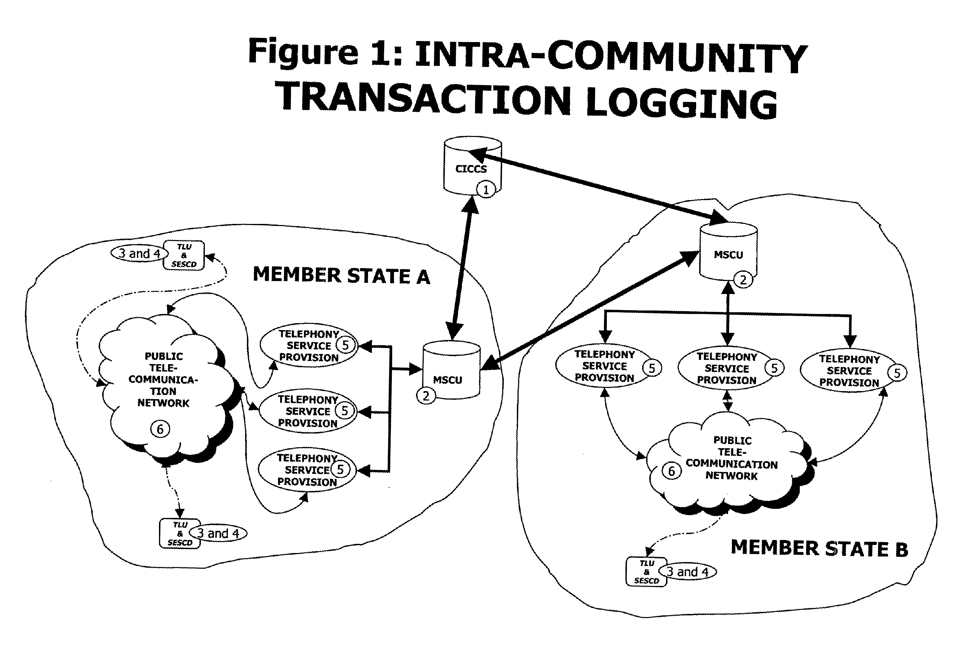

In one form, the current invention is a system for intra-Community transaction logging, consisting of the following autonomous and independent procedures, logical diagrams, phases and sub-processes, as laid-out in Figure 1:

1. Central Intra-Community Controlling System (CICCS). It is a collection containing all intra-Community taxable transactions.

2. Member State Collecting Unit (MSCU), which stores all B2C and national B2B transactions. All MSCUs are interconnected via dedicated secure high-speed data exchange lines and have a direct link to the CICCS.

3. Secure Electronic Signature Creation Device (SESCD). Procedure to create "Advanced Secure Electronic Digital Signatures" (ASEDS) for all taxable B2B invoices and B2C period closures issued by a single taxable entity.

4. Transaction Logging Unit (TLU). Logical process for capturing all taxable transactions carried-out by a single taxable entity. There are 3 main types of TLU: TLU for Business to Business Transactions (TLU4B2BT), TLU for Business to Consumer Transactions (TLU4B2CT) and TLU for Government Transactions (TLU4GOVT). Further categorization for the TLU will be presented later on.

5. Telephony Service Provisions (TSPs). These consist of the value added services offered by the network operators, when said services provide the "*vehicles*" for transmitting the transactions captured by the TLUs.

6. Public Telecommunications Networks (landlines, cellular and satellite). These act as the *"routes"* for interconnecting the TLUs with the MSCUs in each Member State.

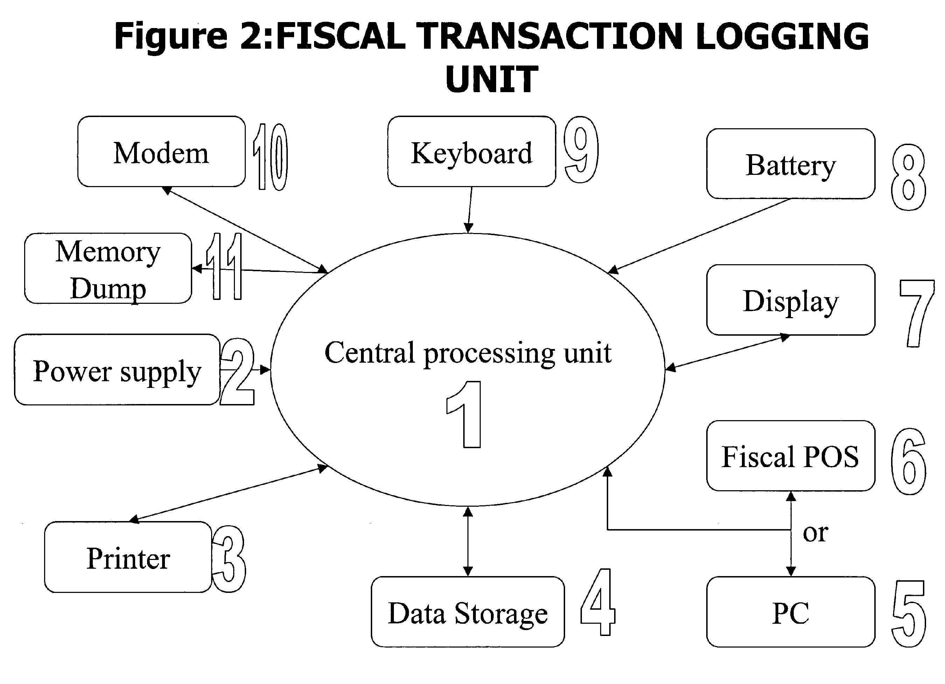

In another form, the current invention is a device for capturing and guaranteeing the authenticity of the origin and integrity of the contents for each VAT transaction effected within the EU, using appropriate technical and procedural means to create ASEDS. The system is an electronic device potentially but not mandatory based on micro controller and consists of the following sub-systems, as laid-out in Figure 2:

1. Central processing unit.
2. Power supply unit.
3. Printer for incoming transactions.
4. Data storage (program and fiscal memory).
5. Serial communication port for interconnection to other data processing device (invoice issuing computer).

6. Serial communication port for interconnection to other data processing device (Fiscal POS).

7. Display unit.

8. Battery backup unit.

9. Keyboard.

10. Public Telephony interface device (modem).

11. Serial communication port for Fiscal memory dump.

In accordance with another aspect of the present invention, the TLU is a distinct and separate electronic device from the SESCD.

In accordance with another aspect of the present invention, both the TLU and the SESCD are logical procedures and co-exist in the same electronic device (hardware), which is based on microcontroller. In this case the single device is a combined TLU-SESCD and will be herein referred to as "Fiscal Transaction Logging Unit" (**FTLU**).

The **FTLU** has a "Special Serial Communication Port" (SSCP) for data transfer to and from the interconnected computer system or Fiscal POS. The **FTLU** also has a second serial port, which is used for dumping the data stored in the fiscal memory.

The **FTLU** is connected to every invoice issuing workstation or POS. For every new invoice (or Sales Closure) to be issued, the **FTLU** is fed (via its serial port and a simple serial communication protocol) with a readable ASCII plain text file with the invoice (Sales Closure) contents. This file has the extension _a.txt and will be herein referred to as "*_a.txt".

The "*_a.txt" file is processed by the SESCD module of the **FTLU** and an "Advanced Secure Electronic Digital Signature" (ASEDS) is created. Each ASEDS is consecutively numbered via a unique general sequential serial number (ASEDS No) and is stored in the fiscal memory.

The ASEDS consists of 40 characters of the HEX-system (20 bytes) and is amended with the serial number of the **FTLU,** signature creation Date-Time Stamp and ASEDS No. All this ASEDS defining information is compiled into a second readable ASCII plain text file with the extension _b.txt. This file will be herein referred to as "*_b.txt".

An "Advanced Secure Electronic Digital Signature" (ASEDS) is the character sequence, which is produced using the "Secure Hash Algorithm -1" (SHA-1) and which uniquely identifies all fiscal data of every invoice (Sales Closure) processed by said algorithm.

The "Secure Hash Algorithm -1" SHA-1 is a secure hash standard developed by the American "National Institute of Standards and Technology" (NIST), is defined in "Federal Information Processing Standards Publications" FIPS PUB 180-1 and has been accepted by the "International Organization for Standardization" (ISO) and the "International Electrotechnical Commission" (IEC) as "Standard ISO/IEC 10118 - 3, Dedicated Hash-Function 3".

It can be used to produce a *"message digest"* for a given message. Essentially, this is a 160-bit number that represents the message. In theory, no two messages would ever share the same *"message digest".* What this means is that the *"message digest"* can serve as a *fingerprint* for a file or other source of data. SHA-1 is used for digitally *signing* documents or other data.

For the compilation of the ASEDS for each invoice, all printable invoice characters are transmitted to the **FTLU** via the SSCP (for Sales Closure the appropriate "dump fiscal memory" command is issued to the serially interconnected POS and corresponding data are serially received via a "known-filed-and-declared" serial communication protocol). In order to obtain the identity of the printed hard-copy to the electronic invoice contents, the following non-printable control characters are allowed to be transmitted to the **FTLU:**

1. Space (code $20^{hex}$).

2. TAB (code $09^{hex}$).

3. Line Feed (LF - code $0A^{hex}$).

4. Carriage Return (CR - code $0D^{hex}$).

5. Next Page/Form Feed (NP/FF - code $0C^{hex}$).

6. End of File (EOF- code $1A^{hex}$)

After receiving the full invoice data ("*_a.txt" file), the **FTLU** immediately amends a unique character string consisting of the following:

1. It's own serial number.

2. The ASEDS No.

3. 10-digits Date-Time stamp (YYMMDDHHmm, YY stands for Year, MM for Month, DD for Date, HH for Hour and mm for Minute).

Using all the above as input, the 160-bit ASEDS is created, using SHA-1 and the "*_b.txt" file is compiled.

Finally, by scrutinizing the "*_a.txt" file submitted, either by picking predefined lengths from predefined row-column positions, or by searching for predefined keywords, the following principal fiscal data of the transaction are determined:

- Document type ("invoice", "credit note", "void", "exempt", "reverse charge", "closure", or any combination thereof are typical -but not limiting- keyword examples).
- VAT amounts.
- Net taxable transaction value.
- Invoice date.
- VAT-Id.No of the purchaser (where applicable).

All this information, together with the 2 plain text files previously described ("*_a.txt" and "*_b.txt"), is recorded in the **FTLU'** non volatile memory with a simple character-string, which is called "UNIQUE ELECTRONIC TRANSACTION CODE" (UETC).

In accordance with another aspect of the present invention, the previously described "Sale Period Closure" is considered as a single B2C VAT Transaction, containing all B2C transactions carried out by the given Fiscal POS during said period. It is therefore treated by the **FTLU** in an exactly identical manner as the B2B (invoice) transactions.

In accordance with another aspect of the present invention, the maximum length of every UETC does not exceed 160 characters long, in order to be able to use as a transmission "*vehicle*" the "Short Message Service" (SMS) offered by network operators.

In accordance with another aspect of the present invention, every taxable transaction is uniquely modeled by the following fields (spaces, if any, are replaced by the asterisk character "*" - code $2A^{hex}$):

1. Unique Fiscal Identification Number (UFIN) of the **FTLU** which originated the transmission. The UFIN is built as follows:

    a. 2 letters: Country of origin code, also identifying the local currency.
    b. 3 letters: Manufacturer Identification & Production License Approval Code.
    c. 2 digits: Year Assembled.
    d. 1 digit: Fiscal Memory Renewal, with an initial value of 9, last value 0 (thus there are totally 10 times allowed for replacing the fiscal memory).
    e. 6 digits: Factory assembly (production) number.

2. Sequential number of the ASEDS (ASEDS NO, 8 digits).

3. VAT Identification number of the purchaser (2 letters and 18 characters, where applicable, otherwise asterisks).

4. Invoice Date of Issue (6 digits, YYMMDD).

5. Net transaction value exempted from VAT expressed in local currency (12 digits without separator, out of which the last two represent the cents).

6. Total net taxable transaction value excluding VAT expressed in local currency (12 digits without separator, out of which the last two represent the cents).

7. Total VAT amount due expressed in local currency (10 digits without separator, out of which the last two represent the cents).

8. Transaction Flag 1, determining the algebraic action to be taken on accumulators and counters. Allowable values are:

    a. 0 means no action (non taxable transaction).
    b. 1 means increment (invoice, fiscal sales closure).
    c. 2 means reduction (credit note, void invoice, void sales closure).

9. Transaction Flag 2, indicating who is liable to pay the tax. Allowable values are:

    a. 1 means the seller.

b. 2 means the purchaser (reverse charge procedure in effect).

c. 0 means none of the above (an exemption is in force for the current transaction).

10. Transaction Type:

a. 0 means B2B.

b. 1 means B2C.

c. 2 means GOV transaction.

d. 3 and above, means other.

11. ASEDS Creation Date-Time Stamp (10 digits, YYMMDDHHmm).

12. Advanced Secure Electronic Digital Signature (ASEDS), 40 alphanumeric characters.

13. Filler (asterisks).

For the secure transmission of the transaction data, the **FTLU** uses the public telecommunication networks (landlines and/or cellular and/or satellite).

In another form, the present invention is a method, characterized by the following sub-methods, devices, logical procedures and processes, which, when harmoniously cooperate within the scope of the present invention, constitute a unique and novel transaction logging method:

- A Transaction is an agreed activity, which takes place between 2 different parties, the originating-seller and the receiving-purchaser. Depending upon the nature of the 2 parties involved, transactions are generally categorized into 3 different major sectors, namely B2B, B2C and GOV transactions.

- The "Fiscal Transaction Logging Unit" (**FTLU**) is a device, which monitors every single transaction, either electronically (when connected to computers or other electronic devices such as fiscal point of sales, fuel pumps, taximeters, weight scales, coin counting machines, bank note readers, remote vending machines, or any combination thereof), or by direct "keying-in" the data for "hand-written" invoices and receipts (when no electronic data processing equipment is available).

- The Secure Electronic Signature Creation Device (SESCD) is a logical procedure, which guarantees the authenticity of the origin and the integrity of the contents of each transaction, by means of an "Advanced Secure Electronic Digital Signature" (ASEDS). For each transaction processed, it compiles and internally stores the following 2 files (where the indicated asterisk "*" is every time replaced with the device serial number and the ASEDS No):

  ○ "*_a.txt", a readable ASCII plain text file with the transaction contents (invoice or sales closure).
  ○ "*_b.txt", a readable ASCII plain text file for the authentication of the transaction (the ASEDS itself, the Date-Time Stamp, the FTLU UFIN and the ASEDS No).

- Each thus authenticated Transaction is uniquely represented by a simple alphanumeric character string, which forms the UNIQUE ELECTRONIC TRANSACTION CODE (UETC), stored in the **FTLU**'s fiscal memory.

- The **FTLU** uses the public telecommunication "*routes and vehicles*" and transmits the UNIQUE ELECTRONIC TRANSACTION CODE (UETC) to Member State Collecting Units (**MSCU**s).

- Each Member State Collecting Unit (**MSCU**):

  ○ Records all incoming Unique Electronic Transaction Codes (UETC).
  ○ Validates each one of them in terms of fundamental-important key-factors.
  ○ Feeds back to the **FTLU** which originated the transaction the validation results, using the public telecommunication "*routes and vehicles*".
  ○ Where applicable, forwards all valid national transactions to the **FTLU** of the receiving-purchaser, using the public telecommunication *"routes and vehicles"*.
  ○ Where applicable, forwards all valid intra-Community cross-border transactions to the Central Intra-Community Controlling System **(CICCS),** using dedicated secure high-speed data exchange lines.

- The Central Intra-Community Controlling System **(CICCS)** keeps a record for each valid intra-Community cross-border transaction received and forwards them to the Member State Collecting Unit **(MSCU)** of the receiving-purchaser, using dedicated secure high-speed data exchange lines.

Every UETC recorded by the **FTLU** is transmitted via public telecommunication *"routes and vehicles"* to the **MSCU.** The authentication of each transmission is achieved through the unique caller id correlated with each **FTLU.**

In another application of the present invention, the **FTLU,** when so requested, is capable to transmit also the "*_a.txt" file with the contents of the transaction itself.

Using the above described method, system and device, the current invention guarantees the secure logging, transmission and recording in the **MSCU** database of every single transaction under consideration.

In another application of the present invention, the **FTLU** is equipped with audio equipment and visual leds for informing the user about possible mal-function and/or error conditions.

In accordance with another aspect of the present invention, a "Help-Desk-Button" initializes a voice-connection to a special operator, who provides his value added "Help-Desk- Services" under prepaid-agreed commission and fees. These add-on services are offered by the TSPs and facilitate the smooth use of the **FTLUs,** as well as ensure prompt troubleshooting when required.

In all aspects of the current invention, the minimum required external connections the user must provide, in order to commit-to-service the **FTLU,** are electrical power, public telephony access (landline or satellite or mobile sim, or any combination thereof), serial connection to the invoice issuing computer or the fiscal POS. All other operations are carried out by the **FTLU** itself.

In accordance with another aspect of the present invention, the **FTLU** is equipped with data-entry unit (keyboard), display unit (liquid crystal display - LCD) and a series of preset buttons for selecting transaction types. Under this configuration, all non-computerized transactions can be carried-out by the **FTLU.**

In this case, for each hand-written invoice, the user will be asked to key-in the following data, after selecting "transaction type 0" (means B2B), by pressing the appropriate button:

1. VAT Identification number of the purchaser.
2. Invoice date.
3. Net transaction value exempted from VAT expressed in local currency.
4. Total net taxable transaction value excluding VAT expressed in local currency.
5. Total VAT amount due expressed in local currency.
6. Transaction Flag 1 (1 means invoice, 2 means credit note-void invoice, 0 means non taxable transaction).
7. Transaction Flag 2 (tax payable by: himself, the purchaser, none of the above).

In accordance with another aspect of the present invention, all B2C sales conducted in the absence of Fiscal POS, or if the Fiscal POS does not have a serial port for memory dump, will be considered as non-computerized transactions and can be carried-out by the **FTLU,** after selecting "transaction type 1" (means B2C), by pressing the appropriate button and then typing the Closure Totals as follows:

1. Closure date.
2. Net transaction value exempted from VAT expressed in local currency.
3. Total net taxable transaction value excluding VAT expressed in local currency.
4. Total VAT amount due expressed in local currency.
5. Transaction Flag 1 (1 means sales closure, 2 means void sales closure, 0 means non taxable transaction).

Each **MSCU** maintains a database for recording all transactions originated within the Member State territory. All **MSCU**s are interconnected using dedicated secure high-speed data exchange lines and are also linked to the CICCS.

The **MSCU** database contains all "known-filed-and-declared" **FTLU**s within the Member State territory. Each **FTLU** is correlated with a single unique caller-id and the VAT Identification Number of it's owner. Additionally, the TSP ensures that no other communication is effected to and from those caller-id numbers, as well as that no further call forwarding or any other service is activated-allowed whatsoever for those caller-id numbers.

For each 160-characters UETC received, the **MSCU** performs a series of validations, the following 3 being the critical ones:

1. The existence and validity of the **FTLU** UFIN.

2. The serialization of the ASEDS NO, in terms of uniqueness and continuous numbering.

3. The validity of the caller-id through which said UETC has been delivered.

According to one aspect of the current invention, the same **FTLU** cannot generate the same ASEDS NO more than once, as well as each new ASEDS NO should be the immediate last increased by one. Also, the UETC tele-transfer is considered valid only if transmitted via a "known-filed-and-declared" caller id.

If at least one of the validation criteria fails, a feed-back message is transmitted to the originating **FTLU,** notifying the user about the unacceptable transaction. In this case, the user must correct the erroneous condition(s) and re-submit the transaction.

If all validation criteria are met, the transaction is characterized valid and a feed-back message is transmitted to the originating **FTLU,** notifying the **FTLU** that the transaction is validated.

Each valid transaction is recorded using the UETC, appended with the caller-id and the transmission Date-Time Stamp(s).

Each valid transaction triggers the following updates:

1. The seller liabilities (owner of the transmitter **FTLU)** are debited with the net taxable amounts and VAT due.
2. The purchaser deductible purchases (owner of the receiver **FTLU)** are credited with the same net taxable amounts and VAT due (where applicable).

The updates are algebraic, meaning that the invoices increase the liabilities, whereas the credit notes and void invoices decrease them. This is achieved using Transaction Flag 1.

In this way, the **MSCU** database maintains real time credit or debit balances for each taxable entity in terms of net taxable amounts and VAT liability.

For the detailed description of one applied visualization of the present invention, all necessary procedures for recording a typical sales B2B transaction will be monitored, where "Company C" (herein referred to as CUSTOMER) buys from "Company S" (herein referred to as SUPPLIER) services for an agreed total net taxable amount of 1.000,00 Euros and 190,00 Euros VAT due.

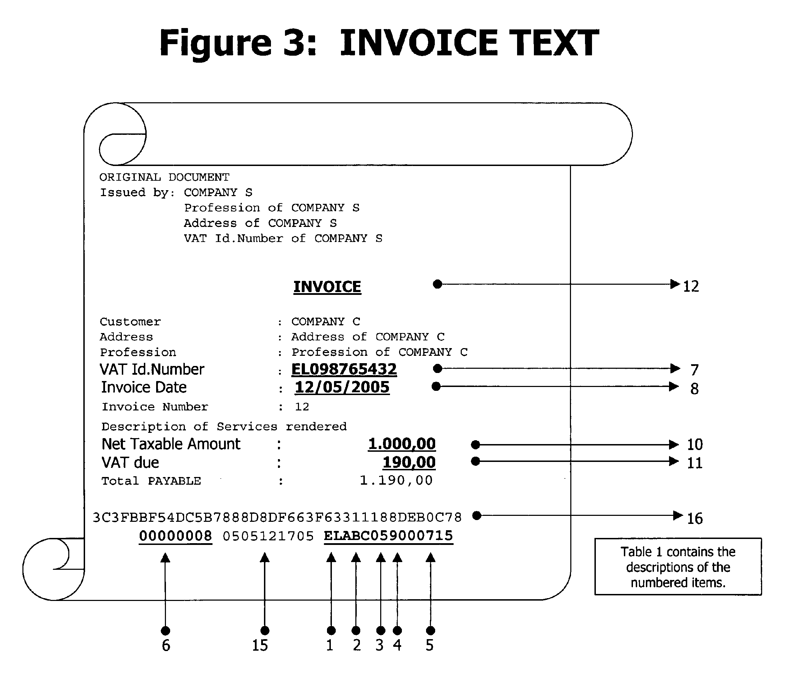

Let the VAT Identification Number of the CUSTOMER be EL098765432 (figure 3-item 7), whereas the SUPPLIER has a "known-filed-and-declared" **FTLU** under the UFIN ELABC059000715 (figure 3 - items 1 to 5) and uses a mobile telecommunication SIM with caller id 00306977123456 (not shown).

Using the serial port (figure 2-item 5), the **FTLU** is fed with the invoice text (figure 3). The **FTLU** appends it's own UFIN, grants ASEDS No 8 (figure 3-item 6) and 10-digits date-time stamp (figure 3-item 15), applies the SHA-1 algorithm and produces the ASEDS (figure 3, item 16). Then it creates the 2 plain ASCII text files named:

ELABC05900071500000008_a.txt and
ELABC05900071500000008_b.txt.

The "ELABC05900071500000008_a.txt" contains only the alphanumeric printable characters of the specific invoice, including all spaces, TABS, line feeds, carriage returns, form feeds, end-of-file markers, but excluding special formatting characters. It can be read by any simple editor (such as notepad.exe).

The "ELABC05900071500000008_b.txt" file is the ASEDS for the specific invoice and in the example under consideration, it will be formed with the following single-line characters:

3C3FBBF54DC5B7888D8DF663F63311188DEB0C78
<u>ELABC05900071500000008</u>0505121705

Finally, the **FTLU** detects the "INVOICE" keyword (figure 3-item 12), thus assigning "transaction flag 1" the value of "1" -meaning increment of accumulators and counters), the invoice date (figure 3-item 8) and invoice amounts (figure 3-items 10, 11) and forms the Unique Electronic Transaction Code (UETC), which uniquely represents the transaction, as described in the 17 rows - 3 columns Table 1.

It should be noted that, in Table 1 (page 22), the 160 characters are presented in tabular format only for readability purposes, since in all applications of the current invention, they will be transmitted as a single-line text message.

The first 22 underlined and highlighted characters are **<u>unique</u>** throughout Europe and they represent the 22-digits "DIGITAL TRANSACTION IDENTITY" (DTI).

The **FTLU** then sends as a simple SMS the 160-character long UETC to the number 00306944123456 (**MSCU),** using the mobile sim card with telephone number 00306977123456.

The TSP Message Center receives said SMS and performs the following validations and operations:

a. Is caller-id 00306977123456 registered as a **FTLU** ? If not, then SMS should be rejected.

b. Is caller-id 00306977123456 (**FTLU**) allowed to send SMS to 00306944123456 (**MSCU**) ? If not, then SMS should be rejected.

c. If the above 2 validations are positive, the SMS is forwarded via dedicated secure high-speed data exchange lines to the **MSCU.**

d. As soon as the SMS is safely delivered to the **MSCU** database, a feed-back "*message-delivered to MSCU*" confirmation is sent to the transmitter **FTLU,** which is thus waiting for the message validation & acceptance by the **MSCU**.

The **MSCU** receives the SMS with the 160-characters UETC and proceeds to the following 3 critical validations:

a. Is the UFIN ELABC059000715 a valid one ?

b. Is the last valid ASEDS NO received from said **FTLU** 7 (seven)?

c. Is the **FTLU** transmitting from the "known-filed-and-declared" caller id 00306977123456 ?

If all three critical validations are true, then the transaction is further validated for other criteria. According to one aspect of the current invention, typical validation codes are enlisted in Table 2 (page 23).

If all validation criteria are satisfied, the transaction is accepted and the **MSCU** "issues" a couple of "*transaction-accepted*" messages. Typically, the 1st one is a message consisting of the 22-digits DTI and a "4-niners" response-code (9999) and the 2nd one is the UETC itself. In the example under consideration, the "*transaction-accepted"* double messages are compiled as follows:

ELABC059000715000000089999 sent to caller-id 00306977123456.

And:

The validated full UETC is sent to the customer's **FTLU,** notifying him about the said transaction acceptance.

The TSP's Message Center receives said double "*transaction accepted*" messages and performs the following simple operations:

a. The first "*transaction-accepted*" SMS is forwarded to the caller-id 00306977123456 (originating **FTLU**).

b. The second "*transaction-accepted*" SMS with the original UETC message is forwarded to the indicated caller-id (the Customer's **FTLU**).

c. As soon as the 1st SMS is safely delivered to the originating **FTLU,** a feed-back "*message-delivered to originating FTLU*" confirmation is sent to the transmitter **MSCU.**

d. As soon as the 2nd SMS is safely delivered to the Customer's **FTLU,** a feed-back "*message-delivered to Customer FTLU*" confirmation is sent to the transmitter **MSCU.**

If the transaction fails at least one validation criterion, then it is considered invalid and only one SMS is sent back to the originating **FTLU**, in order to notify the SUPPLIER that the transaction under consideration is not valid (for example the CUSTOMER VAT identification number is non-existent). In the example under consideration, the "*transaction-rejected*" message is compiled as follows:

ELABC059000715000000084001

Assuming that the said transaction is valid, then the records for the 2 parties involved will be amended as follows:

| COMPANY C (CUSTOMER) | | | | | |
|---|---|---|---|---|---|
| Date | DTI | TAXABLE SALES | VAT LIABILITIES | DEDUCTIBLE PURCHASES | DEDUCTIBLE VAT |
| 12/05/2005 | ELABC05900071500000008 | | | 1.000,00 | 190,00 |

| COMPANY S (SUPPLIER) | | | | | |
|---|---|---|---|---|---|
| Date | DTI | TAXABLE SALES | VAT LIABILITIES | DEDUCTIBLE PURCHASES | DEDUCTIBLE VAT |
| 12/05/2005 | ELABC05900071500000008 | 1.000,00 | 190,00 | | |

The above tables demonstrate the concurrent update of the VAT records for both parties involved, with a common unique key being the 22-digits DTI and establishes one concept of the present invention.

## Table 1: Typical B2B Unique Electronic Transaction Code

| # | Value | Description |
|---|---|---|
| 1 | EL | Country of origin (EL:Greece, local currency is Euro) |
| 2 | ABC | Manufacturer Identification & Production License Approval Code |
| 3 | 05 | Year Assembled |
| 4 | 9 | Fiscal Memory Renewal Digit |
| 5 | 000715 | Factory assembly (production) number. |
| 6 | 00000008 | Sequential number of the ASEDS (ASEDS NO). |
| 7 | EL0987765432********* | VAT Identification Number of the purchaser (2 letters and 18 characters) |
| 8 | 050512 | Invoice Date of Issue (YYMMDD). |
| 9 | 000000000000 | Net transaction value exempted from VAT expressed in local currency (12 digits without separator, out of which the last two represent the cents) |
| 10 | 000001000000 | Total net taxable transaction value excluding VAT expressed in local currency (12 digits without separator, out of which the last two represent the cents). |
| 11 | 000000019000 | Total VAT amount due expressed in local currency (10 digits without separator, out of which the last two represent the cents). |
| 12 | 1 | Transaction Flag 1 (algebraic action) |
| 13 | 1 | Transaction Flag 2 (tax payable by) |
| 14 | 0 | Transaction Type |
| 15 | 0505121705 | ASEDS Creation Date-Time Stamp (YYMMDDHHmm). |
| 16 | 3C3FBBF54DC5B7888D8DF663F6331118BDEB0C78 | ASEDS. |
| 17 | ********************** | Filler (since spaces are not allowed, they are replaced by asterisks). |

# Table 2: Typical MSCU Validation Codes

| Validation Code | Explanation | Corrective Actions |
|---|---|---|
| 9999 | Transaction Accepted | None |
| 0100 | NON COMPATIBLE FORMAT | Resubmit the Transaction with compatible format. |
| 0101 | Value Transaction with zero amounts | Resubmit the Value Transaction with the correct non-zero amounts. |
| 0102 | Transaction with non-positive ASEDS-NO | Resubmit the Transaction with a positive ASEDS-NO. |
| 0103 | UETC contains Non Acceptable ASCII characters | Resubmit the Transaction with valid ASCII characters. |
| 1000 | Non Existent FTLU UFIN. | The FTLU must be registered prior transmitting. |
| 1001 | Non Active FTLU UFIN | The FTLU must be activated prior transmitting. |
| 1002 | Invalid ASEDS-NO. | The ASEDS-NO must be unique and consecutive. |
| 2001 | Invalid Transaction Date | Transaction dates must be consecutive. |
| 2002 | Invalid ASEDS Creation Date-Time Stamp | Transaction ASEDS Creation Date-Time Stamp must be consecutive. |
| 3001 | Caller-id not registered | Resubmit the Transaction after installing the correct caller-id (sim) in the FTLU. |
| 4001 | Not Existent CUSTOMER VAT ID-No | Resubmit the Transaction with a valid CUSTOMER VAT-ID-No. |
| 4002 | The CUSTOMER does not have an active FTLU. | Notify the CUSTOMER to enroll for an FTLU, in order to be able to receive all his purchases. |
| 4003 | The CUSTOMER did not accept the transaction. | The transaction refers to other CUSTOMER. Resubmit the transaction to the right CUSTOMER VAT-ID-No. |
| 4004 | The CUSTOMER did not accept the transaction details. | The UETC is wrong (amounts, flags, dates). Resubmit the transaction with the correct ETC. |

**Claims**

1. Method for checking the authenticity of the origin and integrity of the contents of "Value Added Tax" (VAT) transactions, using a unique electronic transaction code, said method consisting of the following steps and procedures:

   • the furnishing of all VAT document-issuing taxable entities with technical and procedural means for capturing and recording the fiscal data for every VAT transaction;
   • the authentication of the origin and integrity of the contents for every VAT document captured, by means of data in electronic format which are attached to or logically associated with said VAT document;
   • the formation of an alphanumeric character sequence, which uniquely identifies within the European Union (EU) territory every authenticated VAT transaction and represents the "Unique Electronic Transaction Code" (UETC);
   • the safe coupling of said data-gathering technical and procedural means to "Member State Collecting Units" (MSCUs) using the public landlines, cellular telephony and satellite telecommunications networks, or any combination thereof, where said telecommunication networks act as the *"routes"* for interconnecting said data-gathering technical and procedural means to the corresponding MSCU in each EU Member State;
   • the provision of value added services offered by network operators, where said services act as the "*vehicles*" for transmitting the UETC for every VAT transaction compiled by said data-gathering technical and procedural means to the appropriate interconnected MSCU;
   • the usage of technical means and equipment to safeguard of the identity of the taxable entity who initiated the transaction.

2. Method as claimed in claim 1, **characterized in that** appropriate length limitations restrict the maximum allowable length of every UETC, in order to enable said UETC to use as a transmission "*vehicle*" the "Short Message Service" (SMS) offered by any cellular network operator and telephony service provider operating anywhere within the EU.

3. Method **characterized in that** every "Sale Period Closure" report issued by a "Fiscal Point Of Sale Terminal" (FPOST), is considered as a single "Business to Consumer" (B2C) VAT document, encapsulating all B2C transactions carried out by said FPOST over said period and therefore the contents of said "Sale Period Closure" report are treated in an exactly identical manner as claimed in claim 1.

4. Device, herein referred to as "Fiscal Transaction Logging Unit" (FTLU), which provides the technical and procedural means for capturing and recording the fiscal data of a VAT transaction and guaranteeing the authenticity of the origin and integrity of the contents of relevantly issued VAT document, consisting of following modules:

   • a data processing unit;
   • non volatile memory devices for storing programs and fiscal data;
   • communication ports for fiscal memory dump and interconnection to other data processing devices, such as computers, or fiscal point of sale terminals, or fuel pumps, or taximeters, or weight scales, or coin counting machines, or bank note readers, or remote vending machines, or any combination there of;
   • a printer device or interface;
   • a display device or interface;
   • a keyboard device or interface;
   • a public telephony interface or device for enabling safe usage of public "*routes and vehicles*" as claimed in claim 1 for transmitting and receiving authenticated UETC,

   **characterized by**:

   • the ability to receive the transaction contents either from other data processing devices interconnected via the communication port(s), or to accept said transaction contents by use of the keyboard and display device or interface;
   • the creation and internal storage of readable plain text files with the thus received transaction contents;
   • the creation and internal storage of readable plain text files containing character sequences produced by secure hash algorithm(s), whilst said character sequences uniquely identify all fiscal data of every transaction document processed by said algorithms;
   • the use of appropriate technical and procedural means to create and internally store "Advanced Secure Electronic Digital Signature" (ASEDS) in order to guarantee the authenticity of the origin and integrity of the contents for each VAT transaction effected within the EU;

- the ability to transmit each UETC compiled in accordance with claim 1, using the public telephony interface or device;
- the ability to process and internally store all authenticated UETC received through the public telephony interface or device, concerning transactions in which the owner of the FTLU participated as a recipient, whilst the transaction was initiated by the FTLU of the seller;
- the use of technical and procedural means and equipment to safeguard the identity of the owner.

**5.** System for intra-Community transaction logging, consisting of:

- Central Intra-Community Controlling System (CICCS);
- Member State Collecting Units (MSCU);
- Fiscal Transaction Logging Units (FTLUs) as claimed in claim 4;
- Telephony Service Provisions (TSPs), consisting of value added services offered by network operators, when said services act as transmission "*vehicles*" for transmitting each UETC captured by each FTLU;
- Public Telecommunications Networks including landlines, cellular and satellite or any combination thereof, acting as *"routes"* for interconnecting the FTLUs with the corresponding MSCU;

**characterized by** the abilities:

- to capture and record the fiscal data of VAT transactions, using methods as claimed in claim 1;
- to guarantee the authenticity of the origin and integrity of the contents of relevantly issued VAT documents, using methods as claimed in claim 1;
- to transmit the "Unique Electronic Transaction Codes" (UETCs), using methods as claimed in claim 1;
- to process, store and retrieve said UETCs in databases;
- to function either in a small-scale independently within individual business units, or in a medium-scale adopted by a limited number of Member States, or in full-scale implementation all over the European Union.

**6.** Method as claimed in claim 1, **characterized in that** every authenticated VAT transaction carried out within the European Union (EU) territory is uniquely modeled by a simple alphanumeric character sequence, which constitutes the "Unique Electronic Transaction Code" (UETC), compiled by the following structured information:

- Unique Fiscal Identification Number (UFIN) of the FTLU which authenticated said transaction; said UFIN is built as follows:

  - ○ 2 letters: Country of origin code, also identifying the local currency;
  - ○ 3 letters: Manufacturer Identification & Production License Approval Code;
  - ○ 2 digits: Year Assembled;
  - ○ 1 digit: Fiscal Memory Renewal, with an initial value of 9, last value 0;
  - ○ 6 digits: Factory assembly number;

- Sequential number of the ASEDS (ASEDS NO, 8 digits);
- VAT Identification number of the purchaser (2 letters and 18 characters, when not applicable filled with asterisks);
- Invoice Date of Issue (6 digits, YYMMDD, where YY stands for Year, MM for Month, DD for Date);
- Net transaction value exempted from VAT expressed in local currency (12 digits without separator, out of which the last two represent the cents);
- Total net taxable transaction value excluding VAT expressed in local currency (12 digits without separator, out of which the last two represent the cents);
- Total VAT amount due expressed in local currency (10 digits without separator, out of which the last two represent the cents);
- Flag determining the algebraic action to be taken on accumulators and counters (1 digit):

  - ○ 0: no action;
  - ○ 1: increment;
  - ○ 2: reduction;

- Flag indicating who is liable to pay the tax (1 digit):

  ○   1: the seller;
  ○   2: the purchaser;
  ○   0: none of the above;

•   Transaction Type (1 digit):

  ○   0: "Business to Business" (B2B);
  ○   1: "Business to Consumer" (B2C);
  ○   2: "Government transaction" (GOV);
  ○   3 and above: Any other;

•   Advanced Secure Electronic Digital Signature (ASEDS) Creation Date-Time Stamp (10 digits, YYMMDDHHmm, where YY stands for Year, MM for Month, DD for Date, HH for Hour and mm for Minute);
•   Advanced Secure Electronic Digital Signature (ASEDS), 40 alphanumeric characters;
•   Filler up to maximum allowable length.

**7.** Method as claimed in claim 6, **characterized in that** the first 2 fields of the "Unique Electronic Transaction Code" (UETC) are unique throughout Europe, representing the "Digital Transaction Identity" (DTI), compiled by the following structured information:

•   UFIN of the FTLU which authenticated said transaction;
•   Sequential number of the ASEDS.

**8.** Method as claimed in any of the above claims, **characterized in that** the identity of the taxable entity who initiated the transaction and the legitimacy of the "Unique Electronic Transaction Code" (UETC) are safeguarded by the identification of the unique calling number of the FTLU.

**9.** Method, as claimed in any of the above claims, for checking the authenticity of the origin and integrity of the contents of any type of transaction, **characterized by** the usage of a unique electronic transaction code properly compiled by structured information uniquely describing the qualitative and quantitative characteristics of said type of transaction and constituted according to the specific nature of said type of transaction.

**10.** Device as claimed in claim 4, which provides the technical and procedural means for capturing and recording the data of any type of transaction and guaranteeing the authenticity of the origin and integrity of the contents of relevantly issued documents, **characterized by** the usage of method as claimed in claim 9.

# Figure 1: INTRA-COMMUNITY TRANSACTION LOGGING

EP 1 607 897 A2

# Figure 2:FISCAL TRANSACTION LOGGING UNIT

- Modem 10
- Keyboard 9
- Battery 8
- Memory Dump 11
- Display 7
- Power supply 2
- Central processing unit 1
- Printer 3
- Data Storage 4
- Fiscal POS 6
- or
- PC 5

EP 1 607 897 A2

# Figure 3:  INVOICE TEXT

```
ORIGINAL DOCUMENT
Issued by: COMPANY S
           Profession of COMPANY S
           Address of COMPANY S
           VAT Id.Number of COMPANY S
```

**INVOICE** ●————————————→ 12

```
Customer              : COMPANY C
Address               : Address of COMPANY C
Profession            : Profession of COMPANY C
```
VAT Id.Number         : **EL098765432** ●————————————→ 7
Invoice Date          : **12/05/2005** ●————————————→ 8
```
Invoice Number        : 12

Description of Services rendered
```
Net Taxable Amount    :        **1.000,00** ●————————→ 10
VAT due               :          **190,00** ●————————→ 11
```
Total PAYABLE         :        1.190,00
```

```
3C3FBBF54DC5B7888D8DF663F63311188DEB0C78 ●————→ 16
     00000008 0505121705 ELABC059000715
```

6        15        1  2  3 4    5

Table 1 contains the descriptions of the numbered items.

EP 1 607 897 A2